# EUROPEAN PATENT SPECIFICATION

(11) **EP 2 908 028 B1**
(45) Date of publication and mention of the grant of the patent: **09.10.2019**
(21) Application number: 13845411.1
(22) Date of filing: 11.10.2013
(51) Int. Cl.: F16H 25/24, B21D 53/10, F16H 25/20, H02K 7/06, F16H 25/22

(54) **ELECTRIC LINEAR ACTUATOR**
ELEKTRISCHER LINEARANTRIEB
ACTIONNEUR LINÉAIRE ÉLECTRIQUE

(30) Priority: 12.10.2012 JP 2012227497
(43) Date of publication of application: 19.08.2015
(73) Proprietor: NTN Corporation, Osaka-shi, Osaka 550-0003 (JP)
(72) Inventor: OHNISHI, Takaaki, Wako-shi Saitama 351-0193 (JP); HATANO, Kunimichi, Wako-shi Saitama 351-0193 (JP); KAZUNO, Keisuke, Iwata-shi Shizuoka 438-8510 (JP); YOSHIDA, Hirakazu, Iwata-shi Shizuoka 438-8510 (JP)
(74) Representative: Cohausz & Florack
(86) International application number: PCT/JP2013/077741
(87) International publication number: WO 2014/058050

(56) References cited:
- JP-A- H09 144 831
- JP-A- 2002 206 559
- JP-A- 2005 299 726
- JP-A- 2010 270 887
- JP-A- 2010 270 887
- JP-A- 2012 082 921
- JP-U- S 639 547
- US-A1- 2012 247 240

## Description

### Field of the Invention

The present invention relates to an electric actuator provided with a ball screw mechanism used in motors in general industries and driving sections of automobiles etc., and more particularly to an electric linear actuator used in a transmission or a parking brake of automobiles for converting rotary motion from an electric motor to linear motion of a driving shaft via a ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly size of electric motor and power consumption are increased. Thus, the ball screw mechanisms have been widely adopted as more efficient actuators.

In an electric linear actuator of the prior art, an output member connected to a nut can be axially displaced by rotationally driving a ball screw shaft forming a ball screw with use of an electric motor supported on a housing. In usual, since friction of the ball screw mechanism is very low, the ball screw shaft tends to be reversely rotated easily when a pushing thrust load is applied to the output member, and accordingly it is necessary to hold the position of the output member when the electric motor is stopped.

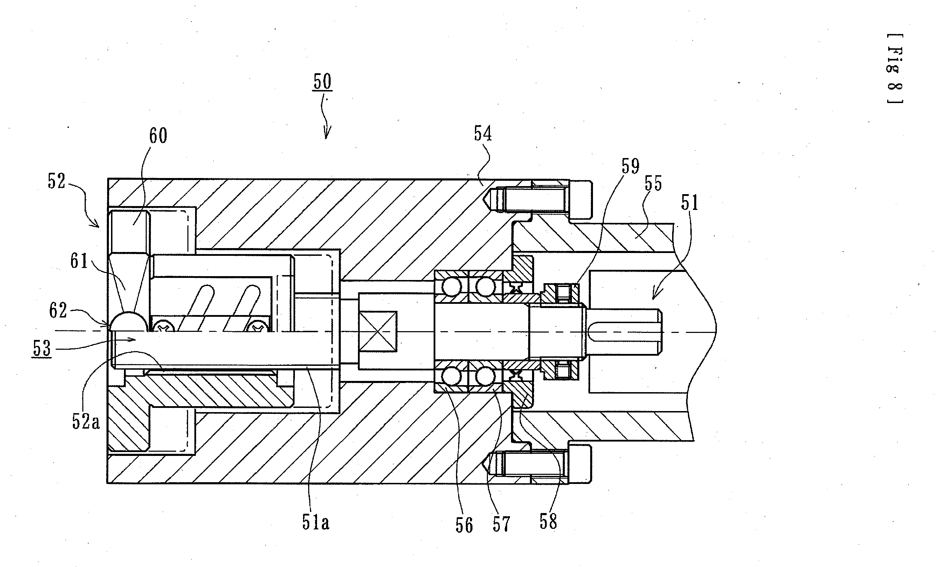

Accordingly, it has been developed an electric linear actuator in which a brake means for an electric motor is arranged or a low efficient means such as a worm gear is provided as a power transmitting means. In Fig. 8, one representative example of them is shown. This electric linear actuator 50 adopts a ball screw mechanism 53 comprising a ball screw shaft 51 rotationally driven by an electric motor (not shown) and a cylindrical ball screw nut 52 threadably engaged with the ball screw shaft 51 via balls (not shown). A rotation of a motor shaft (not shown) of the electric motor causes a rotation of the ball screw shaft 51 connected to the motor shaft and further causes a linear motion (motion in left-right directions in Fig. 8) of the ball screw nut 52.

The ball screw shaft 51 is rotationally supported on cylindrical housings 54, 55 via two rolling bearings 56, 57. These bearings 56, 57 are secured in position by an anti-rotation member 59 for preventing loosening of the bearings 56, 57 via a securing cover 58.

A helical screw groove 51a is formed on the outer circumference of the ball screw shaft 51 with which the ball screw nut 52 is threadably engaged via balls. A helical screw groove 52a corresponding to the helical screw groove 51a of the ball screw shaft 51 is formed on the inner circumference of the ball screw nut 52 and a large diameter portion 60 is also formed on one end of the nut 52.

A flat portion 61 is formed on the side of the large diameter portion 60 by cutting out it as having a flat end face and a cam follower 62 (anti-rotation means for the ball screw nut 52) using a rolling bearing is projected radially outward from a substantially central portion of the flat portion 61.

As described above, since the cam follower 62 is fitted in the cut-out portion, accompanying rotation of the ball screw nut 52 to the rotation of the ball screw shaft 51 can be prevented and since the cam follower 62 rotationally slides on the cut-out portion, problems of sliding friction as well as wear can be reduced (see e.g. Patent Document No. 1 below).

### Document of the Prior Art

Patent Document 1: JP 2007 -333046 A Document US2012/024724 A1 discloses an electric linear actuator comprising an anti-rotation mechanism.

### Disclosure of the Invention

### Problems to be solved by the Invention

In the electric linear actuator 50 of the prior art, since it adopts the cam follower 62 as the anti-rotation means for the ball screw nut 52, it is possible to reduce problems of sliding friction as well as wear and thus to reduce operating torque of the electric linear actuator 50. However, since the cam follower 62 itself uses the rolling bearing, the manufacturing cost would be increased and any anti-wear measures when the housing 54 is formed of aluminum.

It is, therefore, an object of the present invention to provide an electric linear actuator provided with the anti-rotation mechanism for the screw shaft which is able to achieve a simple structure and thus low manufacturing cost and to reduce the sliding friction and wear.

### Means for solving the Problems

For achieving the object of the present invention, there is provided according to the present invention of claim 1, an electric linear actuator comprising a cylindrical housing; an electric motor mounted on the housing; a speed reduction mechanism for reducing rotational speed of the electric motor via a motor shaft; a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft characterized in that a sleeve for an anti-rotation of the screw shaft is fitted in the blind bore of the housing and is press-formed of steel sheet.

According to the present invention of claim 1, since it comprises a speed reduction mechanism for reducing rotational speed of the electric motor via a motor shaft; a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft and is characterized in that a sleeve for an anti-rotation of the screw shaft is fitted in the blind bore of the housing and is press-formed of steel sheet, it is possible to provide an electric linear actuator provided with the anti-rotation mechanism for the screw shaft of simple structure and low manufacturing cost.

It is preferable as defined in claim 2 that protruded ridges are formed on the inner circumference of the blind bore of the housing and the sleeve of the anti-rotation means is engaged with the protruded ridges. This makes it possible to prevent rotation of sleeve relative to the housing without press-fitting of the sleeve into the blind bore of the housing and thus improve the assembling operability of the electric linear actuator.

It is preferable as defined in claim 3 that the sleeve is formed with axially extending recessed grooves arranged equidistantly along its periphery in a petaloid fashion in its cross-section. This makes it possible to simplify the assemble operability with reducing troublesome in engaging the guide pin with the recessed grooves.

It is also preferable that the sleeve is formed of stainless steel sheet as defined in claim 4 or formed of cold rolled steel sheet and surfaces of the sleeve are liquid phase plated as defined in claim 5.

It is preferable as defined in claim 6 that an outer end of the blind aperture is formed with an annular groove into which a holding ring is snap-fitted so that it is abutted against one end of the sleeve to hold it within the blind aperture. This makes it possible to firmly secure the sleeve in an axial direction by a simple way.

It is preferable as defined in claim 7 that the holding ring is press-formed of steel sheet and comprises a securing portion having a circular configuration and adapted to be snap-fitted into the annular groove and a flattened portion extending radially inward from the securing portion and adapted to be abutted against an end of the sleeve, the securing portion being formed with slits equidistantly arranged along the circumference of the securing portion. This makes it possible to easily mount the holding ring on the housing and to improve the assembling operability of the electric linear actuator.

It is also preferable as defined in claim 8 that the holding ring is formed of ZAM steel sheet. This makes it possible to improve the anticorrosion property with low cost.

It is preferable as defined in claim 9 that the through aperture is formed with a predetermined hardened layer by high frequency induction hardening. This makes it possible to improve the anti-wear property of the through aperture and thus to stably support the guide pin for a long term.

It is preferable as defined in claim 10 that outer peripheral faces of the guide pin are crowned. This makes it possible to improve the durability of the guide pin with reducing the contacting surface pressure by eliminating the edge load which would be caused between the through aperture and the guide pin.

Finally, it is preferable as defined in claim 11 that the housing is formed of aluminum alloy. This makes it possible to reduce the weight of the electric linear actuator. It should be noted that defects of aluminum of weakness in material strength and anti-wear property can be solved by provision of the sleeve having higher material strength and anti-wear property than those of aluminum according to the present invention.

### Effects of the Invention

According to the electric linear actuator of the present invention, since it comprises a cylindrical housing; an electric motor mounted on the housing; a speed reduction mechanism for reducing rotational speed of the electric motor via a motor shaft; a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft and is characterized in that a sleeve for an anti-rotation of the screw shaft is fitted in the blind bore of the housing and is press-formed of steel sheet, it is possible to provide an electric linear actuator provided with the anti-rotation mechanism for the screw shaft of simple structure and low manufacturing cost.

### Brief description of the Drawings

[Fig. 1] A longitudinal section view showing a preferable embodiment of an electric linear actuator of the present invention;
[Fig. 2] A longitudinal section view showing a ball screw mechanism of Fig. 1;
[Fig. 3] A perspective view showing a single body of sleeve;
[Fig. 4(a)] A cross-sectional view taken along a line IV-IV in Fig.1;
[Fig. 4(b)] A view taken from a direction of line X-X in Fig. 1;
[Fig. 5] A perspective view showing a modification of a sleeve of Figure 3;
[Fig. 6(a)] A cross-sectional view similar to Fig. 4(a);
[Fig. 6(b)] A view taken similarly to Fig. 4(b);
[Fig. 7(a)] A partially enlarged view showing a holding ring for the sleeve of the present invention;
[Fig. 7(b)] A perspective view showing a single body of the holding ring of Fig. 7(a); and
[Fig. 8] A longitudinal section view showing an electric linear actuator of the prior art.

### Mode for carrying out the Invention

One mode for carrying out the present invention is an electric linear actuator comprising a cylindrical housing; an electric motor mounted on the housing; a speed reduction mechanism for reducing rotational speed of the electric motor via a motor shaft; a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft characterized in that protruded ridges are formed on the inner circumference of the blind bore of the housing; that a sleeve is fitted in the blind bore; that the sleeve is press-formed of cold rolled steel sheet which is liquid phase plated; that the sleeve is formed with axially extending recessed grooves arranged equidistantly along its periphery in a petaloid fashion in its cross-section; and that a radially extending through-aperture is formed in one end of the screw shaft and a guide pin is inserted in the through-aperture and engaged in the recessed grooves.

### Embodiments

One preferred embodiment of the present invention will be hereinafter described with reference to the drawings.

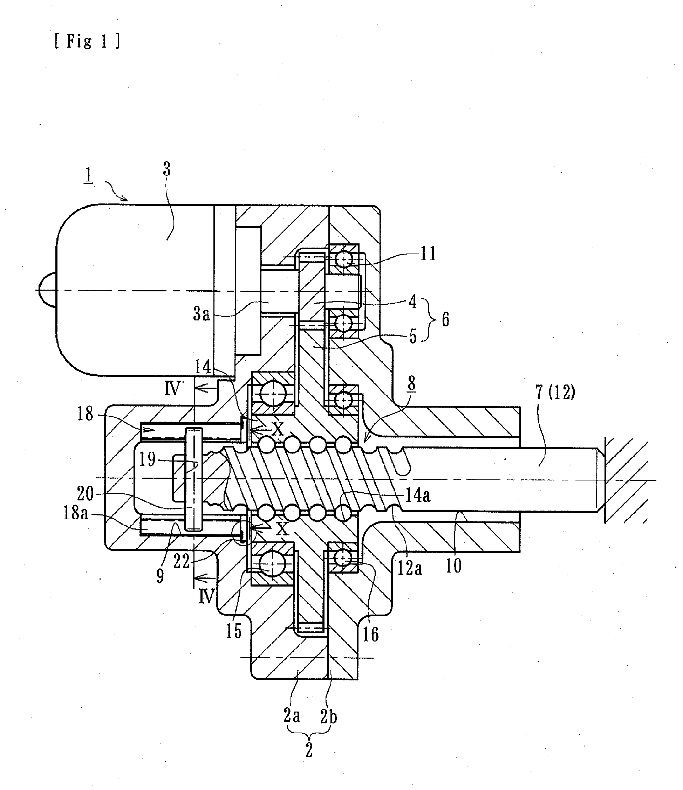

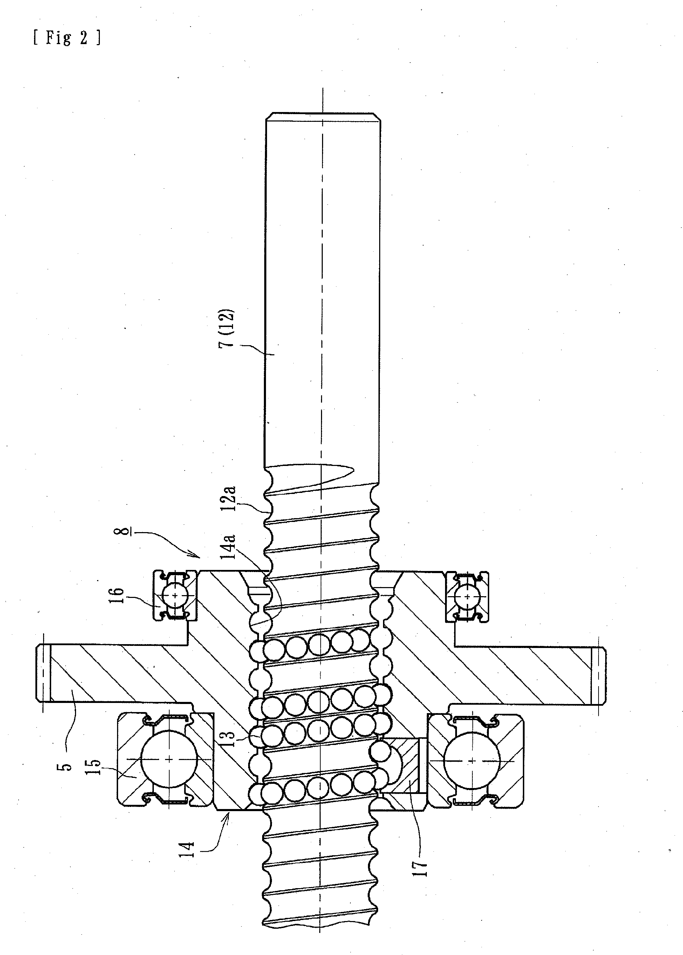

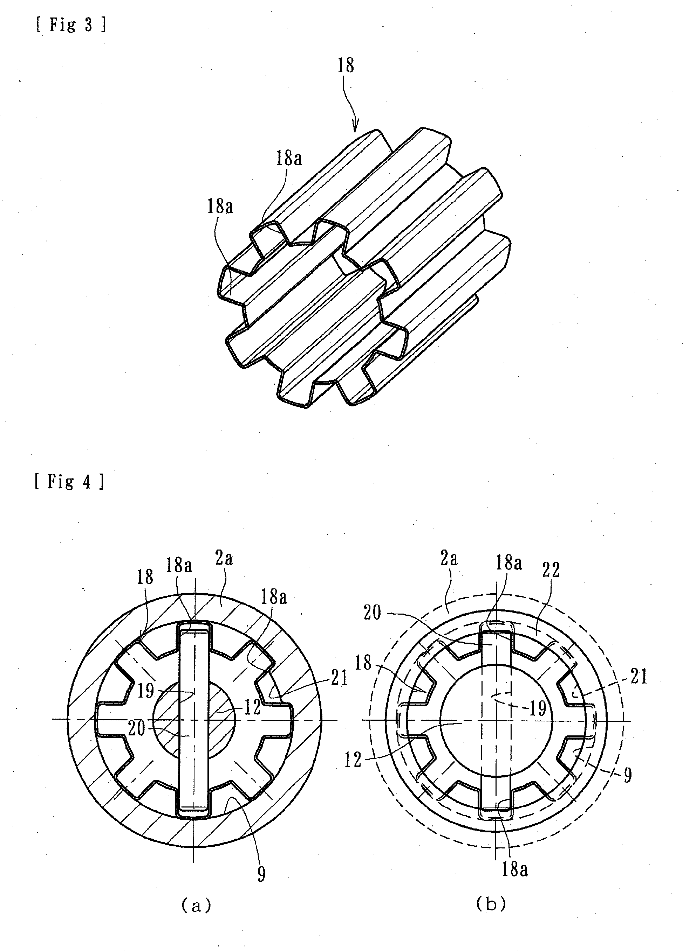

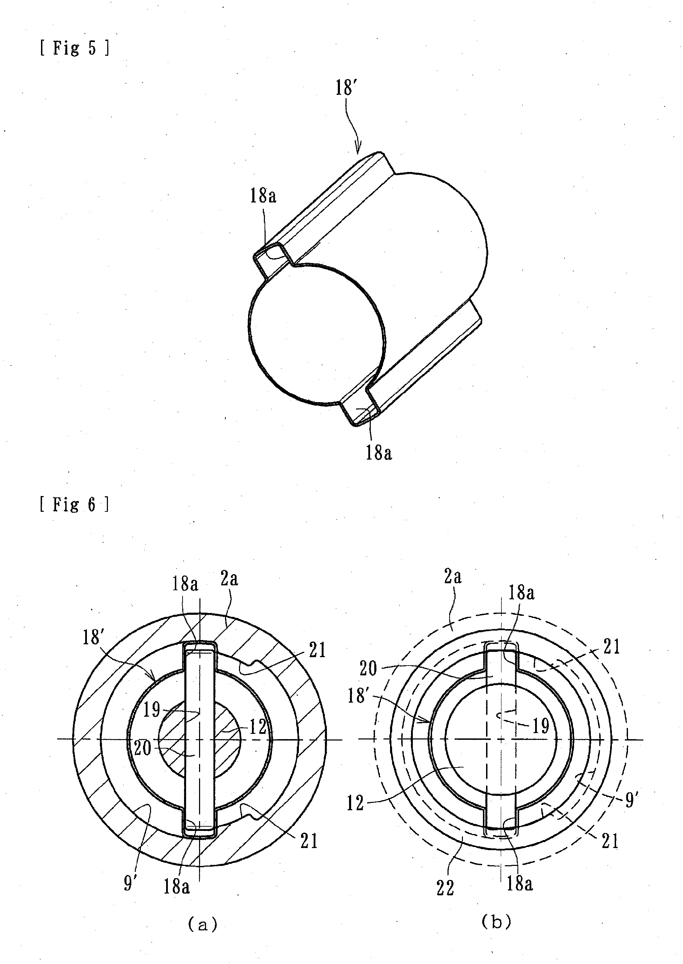

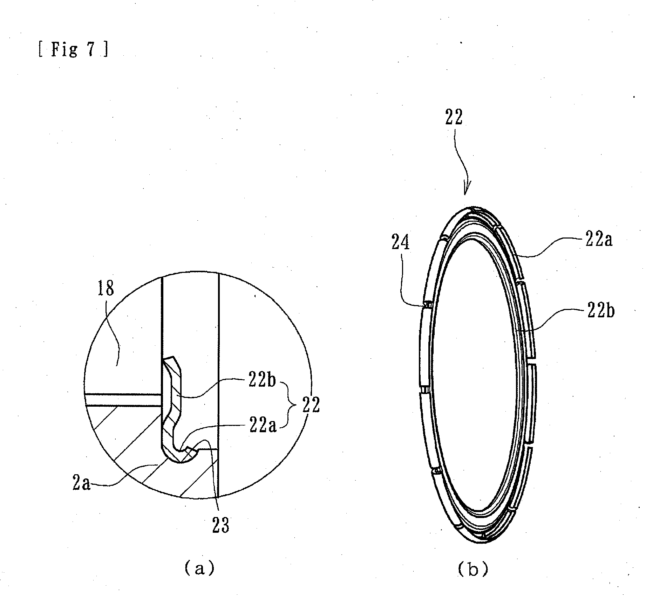

Fig. 1 is a longitudinal section view showing a preferable embodiment of an electric linear actuator of the present invention, Fig. 2 is a longitudinal section view showing a ball screw mechanism of Fig. 1, Fig. 3 is a perspective view showing a single body of sleeve, Fig. 4(a) is a cross-sectional view taken along a line IV-IV in Fig.1, Fig. 4(b) is a view taken from a direction of line X-X in Fig. 1, Fig. 5 is a perspective view showing a modification of a sleeve of Figure 3, Fig.6(a) is a cross-sectional view similar to Fig. 4(a), Fig. 6(b) is a view taken similarly to Fig. 4(b), Fig.7 (a) is a partially enlarged view showing a holding ring for the sleeve of the present invention, and Fig. 7(b) is a perspective view showing a single body of the holding ring of Fig. 7(a).

As shown in Fig. 1, an electric linear actuator 1 comprises a cylindrical housing 2, an electric motor 3 mounted on the housing 2, a speed reduction mechanism 6 comprising a pair of spur gears 4, 5 for reducing rotational speed of the electric motor 3 via a motor shaft 3a, and a ball screw mechanism 8 for converting rotational motion of the electric motor 3 transmitted via the speed reduction mechanism 6 to axial linear motion of a driving shaft 7.

The housing 2 is formed of aluminum alloy such as A 6063 TE, ADC 12 etc. and comprises a first housing 2a and a second housing 2b abutted with and integrally fastened each other by fastening bolts (not shown). The electric motor 3 is mounted on the first housing 2a and blind bores 9, 10 for containing a screw shaft 12 are formed in the first and second housings 2a, 2b respectively.

The smaller spur gear (pinion gear) 4 is press-fitted onto the motor shaft 3a of the electric motor 3 immovably each other and the larger and the motor shaft 3a is rotationally supported by a rolling bearing 11 mounted on the second housing 2b. The larger spur gear 5 is formed integrally with a nut 14 forming the ball screw mechanism 8 described later more in detail and mates with the smaller spur gear 4. The driving shaft 7 is formed integrally with a screw shaft 12 forming the ball screw mechanism 8.

As shown in an enlarged view of Fig. 2, the ball screw mechanism 8 comprises the screw shaft 12 and the nut 14 threadably engaged with the screw shaft 12 via balls 13. The screw shaft 12 is formed with a helical screw groove 12a on its outer circumference and supported axially movably but not rotationally. On the other hand, the nut 14 is formed on its inner circumference with a helical screw groove 14a corresponding to the helical screw groove 12a of the screw shaft 12 and a number of balls 13 are rollably accommodated between these screw grooves 12a, 14a. The nut 14 is supported on the first and second housings 2a, 2b via two bearings 15, 16 rotationally but axially immovably relative to the housings 2a, 2b. A numeral 17 denotes a bridge member for achieving an endless circulating passage of balls 13 through the screw groove 14a of the nut 14.

The cross-sectional configuration of each screw groove 12a, 14a may be either one of circular-arc or Gothic-arc configuration. However, this embodiment adopts the Gothic-arc configuration since it can have a large contacting angle with the ball 13 and a small axial gap. This enables to have large rigidity against the axial load and thus to suppress generation of vibration.

The nut 14 is formed of case hardened steel such as SCM 415 or SCM 420 and its surface is hardened to HRC 55∼62 by vacuum carburizing hardening. This enables to omit treatments such as buffing for scale removal after heat treatment and thus to reduce the manufacturing cost. On the other hand, the screw shaft 12 is formed of medium carbon steel such as S 55C or case hardened steel such as SCM 415 or SCM 420 and its surface is hardened to HRC 55∼62 by induction hardening or carburizing hardening.

The larger gear 5 forming the reduction mechanism 6 is integrally secured on the outer circumference of the nut 14 and two supporting bearings 15, 16 are press-fitted onto either side of the larger gear 5 via a predetermined interface. This makes it possible to prevent generation of axial positional displacement between the supporting bearings 15, 16 and the larger gear 5 although a thrust load would be applied to them from the driving shaft 7. In addition, each of the supporting bearings 15, 16 is formed of the deep groove ball bearing of sealed type in which shield plates are arranged on either side of the support bearing to prevent leakage of grease contained in the bearings and penetration of worn powder or debris into the bearings from outside.

According to the present invention, the electric linear actuator 1 is provided with an anti-rotation means of the screw shaft 12 comprising a cylindrical sleeve 18 and a guide pin 20 as shown in Fig. 1. The sleeve 18 is press-formed of cold rolled steel sheet (e.g. JIS SPCC family) as having axially extending recessed grooves 18a arranged equidistantly along its periphery in a petaloid fashion in its cross-section. Provision of the sleeve 18 having higher material strength and anti-wear property than those of the first housing 2a of aluminum alloy enables to increase durability of the electric linear actuator 1, and the arrangement of recessed grooves 18a equidistantly along its periphery in a petaloid fashion enables to simplify assembly of the guide pin 20 to the sleeve 18 due to reduction of troublesome during engagement of the guide pin 20 with the recessed grooves 18a. The sleeve 18 may be formed of other materials than that previously described, example of which are austenitic stainless steel sheet (e.g. JIS SUS 304 family) or ferritic stainless steel sheet (e.g. JIS SUS 430 family), cold rolled steel sheet having liquid phase plating such as electric plating or electroless nickel plating, or high anticorrosive molten plating steel sheet (called as ZAM steel sheet).

As can be seen in Figs. 4(a) and 4(b), the sleeve 18 is press-fitted into the blind bore 9 of the first housing 2a and prevented from being rotated relative to the first housing 2a by protruded ridges 21 formed on the inner circumference of the blind bore 9. On the other hand, the guide pin 20 is mounted on the end of the screw shaft 12 via a through-aperture 19 diametrically formed therein. The through-aperture 19 is hardened by high frequency hardening as having surface hardness of HRC 60∼64.

It is preferable to use a needle roller for a needle roller bearing as the guide pin 20 since it is easily available and has high anti-wear property and shearing strength. In particularly, since outer peripheral faces of each needle roller is crowned, it is possible to improve the durability of the needle roller (i.e. guide pin 20) with reducing the contacting surface pressure by eliminating the edge load which would be caused between the through aperture 19 and the guide pin 20.

Since the guide pin 20 engaging the recessed grooves 18a is inserted in the through-aperture 19 so that the guide pin 20 can rotate in the through-aperture 19, it is possible to provide the electric linear actuator 1 provided with anti-rotation mechanism for the screw shaft 12 which can reduce the sliding friction and wear of the housing 2a and be manufactured at a low cost with a simple structure. In addition, since the through aperture 19 is hardened as having a hardened layer of surface hardness HRC 60∼64 by high frequency induction hardening. It is possible to improve the anti-wear property of the through aperture 19 and thus to stably support the guide pin 20 for a long term.

Then, Fig. 5 shows a modified sleeve 18' of the sleeve 18. This sleeve 18' is press-formed of cold rolled steel sheet and formed with axially extending recessed grooves 18a oppositely arranged each other. Similarly to the sleeve 18, this sleeve 18' has higher material strength and anti-wear property than those of the first housing 2a of aluminum and thus it is possible to improve the durability and to further reduce the manufacturing cost due to its simple configuration.

As can be seen in Figs. 6(a) and 6(b), the sleeve 18' is press-fitted into the blind bore 9' of the first housing 2a and prevented from being rotated relative to the first housing 2a by protruded ridges 21 formed on the inner circumference of the blind bore 9'. On the other hand, the guide pin 20 is mounted on the end of the screw shaft 12 via a through-aperture 19 diametrically formed therein and performs axial guide and anti-rotation functions of the screw shaft 12 relative to the first housing 2a. As described above, it will be appreciated that the sleeve 18' secured on the first housing 2a and the guide pin 20 engaging the recessed grooves 18a cooperate and constitute the anti-rotation mechanism for the screw shaft 12.

Also in this modification, since the guide pin 20 is inserted in the through-aperture 19 so that the guide pin 20 can rotate in the through-aperture 19, it is possible to provide the electric linear actuator 1 provided with anti-rotation mechanism for the screw shaft 12 which can reduce sliding friction and wear of the housing 2a and be manufactured at a low cost with a simple structure.

Finally as shown in Figs 7(a) and 7(b), the sleeve 18 (18') can be axially secured by a holding ring 22 which is snap-fitted in an annular groove (23) formed in the end of the blind bore 9.

The holding ring 22 is press-formed of cold rolled steel sheet made preservative e.g. by zinc plating and comprises a securing portion 22a having a circular configuration and adapted to be snap-fitted into the annular groove 23 and a flattened portion 22b extending radially inward from the securing portion 22a and adapted to be abutted against an end of the sleeve 18 (18') to prevent the sleeve 18 (18') from being come out. The securing portion 22a being formed with slits 24 equidistantly arranged along the circumference of the securing portion 22a. The material of the holding ring 22 may be selected e.g. from austenitic stainless steel sheet, ferritic stainless steel sheet or ZAM steel sheet other than cold rolled steel sheet.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### [Applicability in Industries]

The electric linear actuator of the present invention can be applied to electric linear actuators used in an electric motor for general industries and driving sections of an automobile etc. and having ball screw mechanism for converting the rotational input from an electric motor to the linear motion of a driving shaft.

### Explanation of Reference numerals

- 1: electric linear actuator
- 2: housing
- 2a: first housing
- 2b: second housing
- 3: electric motor
- 3a: motor shaft
- 4: smaller spur gear
- 5: larger spur gear
- 6: speed reduction mechanism
- 7: driving shaft
- 8: ball screw mechanism
- 9, 9', 10: blind bore
- 11: rolling bearing
- 12: screw shaft
- 12a, 14a: screw groove
- 13: ball
- 14: nut
- 15, 16: supporting bearing
- 17: bridge member
- 18, 18': sleeve
- 18a: recessed groove
- 19: through-aperture
- 20: guide pin
- 21: protruded ridge
- 22: holding ring
- 22a: securing portion
- 22b: flattened portion
- 23: annular groove
- 24: slit
- 50: electric linear actuator
- 51: ball screw shaft
- 51a, 52a: screw groove
- 52: ball screw nut
- 53: ball screw mechanism
- 54, 55: housing
- 56, 57: rolling bearing
- 58: securing cover
- 59: anti-rotation member
- 60: large diameter portion
- 61: flat portion
- 62: cam follower

## Claims

1. An electric linear actuator comprising:
a cylindrical housing (2);
an electric motor (3) mounted on the housing (2);
a speed reduction mechanism (6) for reducing rotational speed of the electric motor (3) via a motor shaft (3a);
a ball screw mechanism (8) for converting rotational motion of the electric motor (3) transmitted via the speed reduction mechanism (6) to axial linear motion of a driving shaft (7); the ball screw mechanism (8) comprising a nut (14) formed with a helical screw groove (14a) on its inner circumference and supported by bearings (15, 16) mounted on the housing (2) rotationally but axially immovably, and a screw shaft (12) coaxially integrated with the driving shaft (7), formed with helical screw groove (12a) on its outer circumference corresponding to the helical screw groove (14a) of the nut (14), inserted into the nut (14) via a large number of balls (13), and supported on the housing (2) axially movably but not rotationally; and
a blind bore (9, 9') formed on the housing (2) for containing an end of the screw shaft (12) **characterized in:**
**that** a sleeve (18, 18') for an anti-rotation of the screw shaft (12) is fitted in the blind bore (9, 9') of the housing (2), is press-formed of steel sheet and has a continuously substantially cylindrical shape.

2. An electric linear actuator of claim 1 wherein protruded ridges (21) are formed on the inner circumference of the blind bore (9, 9') of the housing (2) and the sleeve (18, 18') of the anti-rotation means is engaged with the protruded ridges (9, 9').

3. An electric linear actuator of claim 1 or 2 wherein the sleeve (18) is formed with axially extending recessed grooves (18a) arranged equidistantly along its periphery in a petaloid fashion in its cross-section.

4. An electric linear actuator of any one of claims 1∼3 wherein the sleeve (18, 18') is formed of stainless steel sheet.

5. An electric linear actuator of any one of claims 1∼3 wherein the sleeve (18, 18') is formed of cold rolled steel sheet and surfaces of the sleeve (18, 18') are liquid phase plated.

6. An electric linear actuator of claim 1 or 2 wherein an outer end of the blind aperture (9, 9') is formed with an annular groove (23) into which a holding ring (22) is snap-fitted so that it is abutted against one end of the sleeve (18, 18') to hold it within the blind aperture (9, 9').

7. An electric linear actuator of claim 6 wherein the holding ring (22) is press-formed of steel sheet and comprises a securing portion (22a) having a circular configuration and adapted to be snap-fitted into the annular groove (23) and a flattened portion (22b) extending radially inward from the securing portion (22a) and adapted to be abutted against an end of the sleeve (18, 18'), the securing portion (22a) being formed with slits (24) equidistantly arranged along the circumference of the securing portion (22a).

8. An electric linear actuator of claim 6 or 7 wherein the holding ring (22) is formed of ZAM steel sheet.

9. An electric linear actuator of claim 1 wherein the through aperture (19) is formed with a predetermined hardened layer by high frequency induction hardening.

10. An electric linear actuator of claim 1 wherein outer peripheral faces of the guide pin (20) are crowned.

11. An electric linear actuator of claim 1 wherein the housing (2) is formed of aluminum alloy.

## Patentansprüche

1. Elektrischer Linearantrieb, umfassend:
ein zylindrisches Gehäuse (2);
einen Elektromotor (3), der an dem Gehäuse (2) befestigt ist;
einen Drehzahlreduzierungsmechanismus (6) zum Reduzieren der Drehzahl des Elektromotors (3) über eine Motorwelle (3a);
einen Kugelgewindetriebmechanismus (8) zum Umwandeln der Drehbewegung des Elektromotors (3), die über den Drehzahlreduzierungsmechanismus (6) übertragen wird, in eine axiale Linearbewegung einer Antriebswelle (7); wobei der Kugelgewindetriebmechanismus (8) eine Mutter (14) umfasst, die mit einer wendelförmigen Schneckennut (14a) auf ihrem Innenumfang gebildet und durch Lager (15, 16) gestützt ist, die an dem Gehäuse (2) drehbar, jedoch axial unbeweglich befestigt sind, und eine Schneckenwelle (12), die koaxial mit der Antriebswelle (7) integriert ist, gebildet mit einer wendelförmigen Schneckennut (12a), die der wendelförmigen Schneckennut (14a) der Mutter (14) entspricht, auf ihrem Außenumfang, eingesetzt in die Mutter (14) über eine große Anzahl von Kugeln (13), und an dem Gehäuse (2) axial beweglich, jedoch nicht drehbar gestützt; sowie
eine Sacklochbohrung (9, 9'), die an dem Gehäuse (2) gebildet ist, um ein Ende der Schneckenwelle (12) zu halten, **dadurch gekennzeichnet,**
**dass** eine Hülse (18, 18') für eine Drehblockierung der Schneckenwelle (12) in der Sacklochbohrung (9, 9') des Gehäuses (2) befestigt ist, aus Stahlblech gepresst ist und eine durchgängige, im Wesentlichen zylindrische Form aufweist.

2. Elektrischer Linearantrieb nach Anspruch 1, wobei auf dem Innenumfang der Sacklochbohrung (9, 9') des Gehäuses (2) vorstehende Kämme (21) gebildet sind und die Hülse (18, 18') der Drehblockierungsmittel in die vorstehenden Kämme (9, 9') eingreift.

3. Elektrischer Linearantrieb nach Anspruch 1 oder 2, wobei die Hülse (18) mit sich axial erstreckenden vertieften Nuten (18a) gebildet ist, die entlang ihres Umfangs äquidistant und innerhalb ihres Querschnitts in blütenblattartiger Weise angeordnet sind.

4. Elektrischer Linearantrieb nach einem der Ansprüche 1 bis 3, wobei die Hülse (18, 18') aus Edelstahlblech gebildet ist.

5. Elektrischer Linearantrieb nach einem der Ansprüche 1 bis 3, wobei die Hülse (18, 18') aus kaltgewalztem Stahlblech gebildet ist und die Oberflächen der Hülse (18, 18') flüssigphasenbeschichtet sind.

6. Elektrischer Linearantrieb nach Anspruch 1 oder 2, wobei ein äußeres Ende der Sacklochöffnung (9, 9') mit einer ringförmigen Rille (23) gebildet ist, in die ein Haltering (22) so eingeschnappt ist, dass er an ein Ende der Hülse (18, 18') anstößt, um sie innerhalb der Sacklochöffnung (9, 9') zu halten.

7. Elektrischer Linearantrieb nach Anspruch 6, wobei der Haltering (22) aus Stahlblech gepresst ist und ein Sicherungsteil (22a), das eine kreisförmige Anordnung aufweist und so angepasst ist, dass es in die ringförmige Rille (23) eingeschnappt werden kann, sowie ein abgeflachtes Teil (22b) umfasst, das sich von dem Sicherungsteil (22a) radial nach innen erstreckt und so angepasst ist, dass es an ein Ende der Hülse (18, 18') anstößt, wobei das Sicherungsteil (22a) mit Schlitzen (24) gebildet ist, die äquidistant entlang des Umfangs des Sicherungsteils (22a) angeordnet sind.

8. Elektrischer Linearantrieb nach Anspruch 6 oder 7, wobei der Haltering (22) aus ZAM-Stahlblech gebildet ist.

9. Elektrischer Linearantrieb nach Anspruch 1, wobei die Durchgangsöffnung (19) mit einer vorbestimmten, durch Hochfrequenz-Induktionshärtung gehärteten Schicht gebildet ist.

10. Elektrischer Linearantrieb nach Anspruch 1, wobei die äußeren Umfangsflächen des Führungszapfens (20) kronenartig ausgebildet sind.

11. Elektrischer Linearantrieb nach Anspruch 1, wobei das Gehäuse (2) aus Aluminiumlegierung gebildet ist.

## Revendications

1. Actionneur linéaire électrique comprenant :
un boîtier cylindrique (2) ;
un moteur électrique (3) monté sur le boîtier (2) ;
un mécanisme réducteur de vitesse (6) destiné à réduire la vitesse rotative du moteur électrique (3) par le biais d'un arbre de moteur (3a) ;
un mécanisme de vis à bille (8) destiné à convertir le mouvement rotatif du moteur électrique (3), transmis par le biais du mécanisme réducteur de vitesse (6), en un mouvement linéaire axial d'un arbre d'entraînement (7) ; le mécanisme à vis à bille (8) comprenant un écrou (14), sur la circonférence interne duquel est formée une gorge de vis hélicoïdale (14a) et qui est supporté à rotation par des paliers (15, 16) sur le boîtier (2), mais immobile dans le sens axial, et une tige de vis (12) intégrée de manière coaxiale avec l'arbre d'entraînement (7), sur la circonférence externe de laquelle est formée une gorge de vis hélicoïdale (12a) correspondant à la gorge de vis hélicoïdale (14a) de l'écrou (14), insérée dans l'écrou (14) par le biais d'un grand nombre de billes (13) et supportée sur le boîtier (2) avec mobilité axiale, mais pas à rotation ; et
un alésage borgne (9, 9') formé sur le boîtier (2) destiné à contenir une extrémité de la tige de vis (12), **caractérisé en ce :**
**qu'**un manchon (18, 18') destiné à une anti-rotation de la tige de vis (12) est ajusté dans l'alésage borgne (9, 9') du boîtier (2), est formé à la presse à partir d'une tôle en acier et présente une forme essentiellement cylindrique continue.

2. Actionneur linéaire électrique selon la revendication 1, dans lequel des crêtes en saillie (21) sont formées sur la circonférence interne de l'alésage borgne (9, 9') du boîtier (2) et le manchon (18, 18') du moyen d'anti-rotation entre en prise avec les crêtes en saillie (9, 9').

3. Actionneur linéaire électrique selon la revendication 1 ou 2, dans lequel le manchon (18) est formé avec des gorges en retrait s'étendant axialement (18a) disposées de manière équidistante le long de sa périphérie de manière pétaloïde dans sa section transversale.

4. Actionneur linéaire électrique selon l'une quelconque des revendications 1 à 3, dans lequel le manchon (18, 18') est constitué d'une tôle en acier inoxydable.

5. Actionneur linéaire électrique selon l'une quelconque des revendications 1 à 3, dans lequel le manchon (18, 18') est constitué d'une tôle en acier laminée à froid et les surfaces du manchon (18, 18') sont plaquées en phase liquide.

6. Actionneur linéaire électrique selon la revendication 1 ou 2, dans lequel une extrémité externe de l'ouverture borgne (9, 9') est formée avec une gorge annulaire (23) dans laquelle un anneau de retenue (22) est encliqueté de sorte à buter contre une extrémité du manchon (18, 18') pour le maintenir à l'intérieur de l'ouverture borgne (9, 9').

7. Actionneur linéaire électrique selon la revendication 6, dans lequel l'anneau de retenue (22) est formé à la presse à partir d'une tôle en acier et comprend une section de fixation (22a) ayant une configuration circulaire et conçue pour être encliquetée dans la gorge annulaire (23) et une section aplatie (22b) s'étendant radialement vers l'intérieur de la section de fixation (22a) et conçue pour buter contre une extrémité du manchon (18, 18'), la section de fixation (22a) étant formée avec des fentes (24) disposées de manière équidistante le long de la circonférence de la section de fixation (22a).

8. Actionneur linéaire électrique selon la revendication 6 ou 7, dans lequel l'anneau de retenue (22) est constitué d'une tôle en acier ZAM.

9. Actionneur linéaire électrique selon la revendication 1, dans lequel l'ouverture traversante (19) est formée avec une couche durcie prédéterminée par trempe par induction à haute fréquence.

10. Actionneur linéaire électrique selon la revendication 1, dans lequel les faces périphériques externes de l'axe de guidage (20) sont couronnées.

11. Actionneur linéaire électrique selon la revendication 1, dans lequel le boîtier (2) est constitué d'un alliage d'aluminium.
